(19) Europäisches Patentamt
European Patent Office
Office européen des brevets

(11) **EP 2 247 470 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(21) Anmeldenummer: **08872592.4**

(22) Anmeldetag: **01.12.2008**

(51) Int Cl.:
*B60R 21/0132* (2006.01)    *B60R 21/00* (2006.01)
*B60R 21/013* (2006.01)

(86) Internationale Anmeldenummer:
**PCT/EP2008/066544**

(87) Internationale Veröffentlichungsnummer:
**WO 2009/103374 (27.08.2009 Gazette 2009/35)**

(54) **VERFAHREN UND STEUERGERÄT ZUR ANSTEUERUNG VON PERSONENSCHUTZMITTELN FÜR EIN FAHRZEUG**

METHOD AND CONTROLLER FOR CONTROLLING SAFETY MEANS FOR A VEHICLE

PROCÉDÉ ET APPAREIL DE COMMANDE POUR COMMANDER DES MOYENS DE PROTECTION DES PERSONNES POUR UN VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.02.2008 DE 102008010560**

(43) Veröffentlichungstag der Anmeldung:
**10.11.2010 Patentblatt 2010/45**

(73) Patentinhaber: **Robert Bosch GmbH**
**70442 Stuttgart (DE)**

(72) Erfinder:
• **DOERR, Alfons**
**70597 Stuttgart (DE)**
• **DENZ, Holger**
**70839 Gerlingen (DE)**
• **MAUR, Marcel**
**70839 Gerlingen (DE)**

(56) Entgegenhaltungen:
**DE-A1-102006 018 029**

**Beschreibung**

Stand der Technik

Die Erfindung betrifft ein Verfahren bzw. ein Steuergerät zur Ansteuerung von Personenschutzmitteln nach der Gattung der unabhängigen Patentansprüche.

Aus der gattungsbildenden DE 10 2006 018 029 A1 ist bereits eine Vorrichtung bzw. ein Verfahren zur Ansteuerung von Personenschutzmitteln bekannt, wobei ein Überrollvorgang zur Ansteuerung der Personenschutzmittel führt. Dieser Überrollvorgang wird in Abhängigkeit von einem Haftungskoeffizienten und einem Stabilitätsfaktor bestimmt.

Offenbarung der Erfindung

Das erfindungsgemäße Verfahren bzw. das erfindungsgemäße Steuergerät zur Ansteuerung von Personenschutzmitteln mit den Merkmalen der unabhängigen Patentansprüche haben demgegenüber den Vorteil, dass durch eine Verknüpfung des Rotationszustands, der aus der Wankrate und dem Wankwinkel bestimmt wird und dem Haftungszustand, der aus der Fahrzeugquerbeschleunigung und der Fahrzeugvertikalbeschleunigung bestimmt wird, der Überrollvorgang erkannt wird. Dabei ist die Haftung sehr viel größer als der statische Stabilitätsfaktor. Damit kann beispielsweise ein sogenannter Fahrdynamikbeobachter vermieden werden. Insbesondere ist die Erfindung zur Erkennung von Überrollvorgängen im unteren Wankwinkelbereich von unter 10 Grad geeignet. Erfindungsgemäß ist es nicht notwendig, dass die Analyse der aktuellen Fahrzeugdynamik auf Basis von Sensordaten erfolgt, die für ein Fahrdynamiksystem (ESP) typisch sind. Vielmehr erfolgt eine Bewertung des aktuellen Fahrdynamikzustands indirekt allein über die angreifenden Kräfte und Drehmomente. Damit vereinfacht die vorliegende Erfindung die Erkennung von solchen Überrollvorgängen bei gleichzeitig hoher Zuverlässigkeit der Überrollerkennung.

Ein Steuergerät ist vorliegend ein elektrisches Gerät, das Sensorsignale verarbeitet und entsprechende Steuersignale ausgibt. Üblicherweise verfügt das vorliegende Steuergerät über ein eigenes Gehäuse, beispielsweise aus Metall und/oder Kunststoff.

Ansteuerung bedeutet vorliegend die Aktivierung von Personenschutzmitteln, die vorliegend passiv ausgestaltet sind, wie Airbags, Gurtstraffer u.s.w..

Unter kinematischen und rotatorischen Größen sind vorliegend Beschleunigungen und die Wankrate sowie der Wankwinkel zu verstehen.

Die Haftung, die auch als Reibbeiwert bekannt ist, wird vorliegend, wie in einem abhängigen Anspruch beschrieben, aus der Fahrzeugquer- und Fahrzeugvertikalbeschleunigung bestimmt.

Bei dem statischen Stabilitätsfaktor, üblicherweise mit SSF abgekürzt, handelt es sich um einen Berechnungswert, der den Widerstand gegen einen Überrollvorgang angibt. Daher werden zu seiner Berechnung geometrische Eigenschaften des Fahrzeugs verwendet. Man kann sagen, dass der statische Stabilitätsfaktor ein Maß für die Kopflastigkeit eines Fahrzeugs ist. Der Stabilitätsfaktor kann beispielsweise aus einer Fahrzeugbreite und der Höhe des Schwerpunkts bestimmt werden. Die Breite ist beispielsweise durch den Abstand des rechten und linken Reifens gegeben, die auf einer Achse angeordnet sind. Der Schwerpunkt wird üblicherweise im Labor bestimmt, wobei, je niedriger der statische Stabilitätsfaktor ist, umso größer ist die Wahrscheinlichkeit, dass sich das Fahrzeug in einem Crash überschlägt.

Die Wankrate ist die Drehrate um die Fahrzeuglängsachse, wobei sich ein Fahrzeug, wenn es sich überschlägt, am häufigsten um diese Fahrzeuglängsachse überschlägt. Bei dem Wankwinkel handelt es sich um die integrierte Wankrate, wobei der Wankwinkel auch direkt gemessen werden kann. Es gibt auch Drehbeschleunigungssensoren, die zur Ermittlung der Wankrate und des Wankwinkels durch entsprechende Integration verwendet werden können. Der Begriff "Integration" ist pragmatisch gemeint, wobei es sich dann um eine rechnerübliche Integration handelt. Durch diese beiden Parameter, nämlich die Wankrate und der Wankwinkel, wird der Rotationszustand durch dieses Wertepaar charakterisiert.

Der Haftungszustand wird dagegen durch das Wertepaar aus Fahrzeugquerbeschleunigung und Fahrzeugvertikalbeschleunigung definiert. Damit wird dann die Haftung in lateraler Fahrzeugrichtung bestimmt. Der Haftungszustand ist daher entweder gleich der Haftung oder eine von der Haftung unmittelbar abgeleitete Größe.

Als Nebenbedingung wurde erfindungsgemäß erkannt, dass die Haftung sehr viel größer als der statische Stabilitätsfaktor sein muss, um das erfindungsgemäße Verfahren vorteilhaft zur Anwendung zu bringen.

Die Schnittstelle kann hard- und/oder softwaremäßig ausgebildet sein. Insbesondere kann sie verteilt sein, um die verschiedenen Sensorsignale, nämlich die Fahrzeugquer- und Fahrzeugvertikalbeschleunigung sowie die Wankrate und den Wankwinkel, bereitzustellen. Wie oben angegeben, kann der Wankwinkel gemessen oder berechnet werden. Dies gilt auch für die Wankrate.

Bei der Auswerteschaltung kann es sich um einen Prozessor wie einen Mikrocontroller oder einen anderen Prozessortyp handeln. Insbesondere sind auch Mehrkernprozessortypen denkbar. Die Auswerteschaltung kann jedoch auch eine entsprechende Hardwareschaltung sein, die für einen bestimmten Zweck ausgelegt ist, beispielsweise als ein integrierter Schaltkreis. Auch eine zumindest teilweise diskrete Ausführung ist vorliegend möglich. Das Haftungszustandsmodul, das Rotationszustandsmodul, das Fusionsmodul, das Ansteuerungsmodul sowie das Klassifizierungsmodul aus dem abhängigen Anspruch ist entsprechend hard- und/oder softwaremäßig ausgebildet. D. h., auf einem Mikrocontroller kann es sich bei diesen Modulen um Softwaremodule handeln. Ist die Auswerteschaltung jedoch als reine Hardwareschaltung ausgebildet, kann es sich dabei um Schaltungsabschnitte handeln.

Die Ansteuerungsschaltung ist ein von der Auswerteschaltung üblicherweise getrennter Schaltungsblock, der auch als integrierter Schaltkreis ausgebildet ist, beispielsweise als Teil eines System-ASICS, der verschiedene Funktionen des Steuergeräts beinhaltet. Die Ansteuerungsschaltung weist dabei elektrisch steuerbare Leistungsschalter auf, die beispielsweise einen Zündstrom für ein Zündelement für einen Airbag in einem Ansteuerungsfall freigeben.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln für ein Fahrzeug möglich.

Es ist dabei vorteilhaft, dass die Haftung in Abhängigkeit von einer Division der Fahrzeugquerbeschleunigung durch die Fahrzeugvertikalbeschleunigung bestimmt wird. Dies kann noch durch entsprechende Korrektur, Faktoren bzw. Summanden ergänzt werden, die das Ergebnis dann verfeinern. Damit wird die Haftung in Fahrzeugquerrichtung charakterisiert, die für den gegebenen Überschlag als besonders wichtig anzusehen ist. Alternativ zur Division sind auch Näherungsausdrücke möglich, in denen keine Division vorgesehen ist.

Es ist weiterhin vorteilhaft, dass der Rotationszustand und der Haftungszustand jeweils in mindestens 3 Klassen eingeteilt werden. Der Überrollvorgang wird in Abhängigkeit von diesen Klassifizierungen bestimmt. Es findet also eine Fusion der Klassifizierungen zu einer Gesamtklassifizierung statt. Dafür kann das erfindungsgemäß angegebene Klassifizierungsmodul verwendet werden.

Wie bereits oben angegeben, wird das Verfahren vorzugsweise bei einem Wankwinkel von kleiner als 15 Grad eingesetzt. D. h., ist der Wankwinkel größer, können andere Verfahren zur Anwendung kommen.

Es ist weiterhin vorteilhaft, dass für ein Wertepaar aus der Wankrate und dem Wankwinkel wenigstens drei Bereiche vorgegeben werden. Ein erster Bereich umfasst dabei erste Wertepaare, die unabhängig von der Fahrzeugquerbeschleunigung, der Fahrzeugvertikalbeschleunigung (die aktuell wirkenden Kräfte in lateraler und vertikaler Richtung) sowie den Drehmomenten den Überrollvorgang anzeigen. D. h., dieser erste Bereich beschreibt Ereignisse, die auf jeden Fall zu einem Überrollvorgang führen werden. Es gibt dann kein Zurück mehr. Ein zweiter Bereich umfasst zweite Wertepaare, die keinen Überrollvorgang anzeigen. D. h., in diesem Bereich wird es zu keinem Überrollvorgang überhaupt kommen. Der dritte Bereich, der dritte Wertepaare umfasst, zeigt nur dann einen Überrollvorgang an, wenn der Rotationszustand und der Haftungszustand den Überrollvorgang in der Gesamtheit bedingen. Dabei kann die Schwelle zwischen dem zweiten und dem dritten Bereich in Abhängigkeit von statischen Fahrzeuggrößen, der Fahrzeugvertikalbeschleunigung, dem Wankwinkel und der Haftung bestimmt werden.

Darüber hinaus ist es vorteilhaft, dass die statischen Fahrzeuggrößen dabei der statische Stabilitätsfaktor, die Fahrzeugmasse, die Schwerpunktshöhe im Ruhezustand und ein Trägheitsmoment in Wankrichtung sind.

Vorteilhafterweise sind die Wankratensensorik und die Beschleunigungssensorik für die Erfassung der Fahrzeugquer- bzw. Vertikalbeschleunigung im Steuergerät eingebaut.

Ausführungsbeispiele der Erfindung sind in der Zeichnung dargestellt und werden in der nachfolgenden Beschreibung näher erläutert.

Es zeigen

Figur 1 ein Blockschaltbild des erfindungsgemäßen Steuergeräts mit angeschlossenen Komponenten in einem Fahrzeug,
Figur 2 eine beispielhafte Konfiguration von Softwaremodulen auf einem Mikrocontroller,
Figur 3 ein Signalablaufdiagramm des erfindungsgemäßen Verfahrens und
Figur 4 ein Wankratenwankwinkeldiagramm.

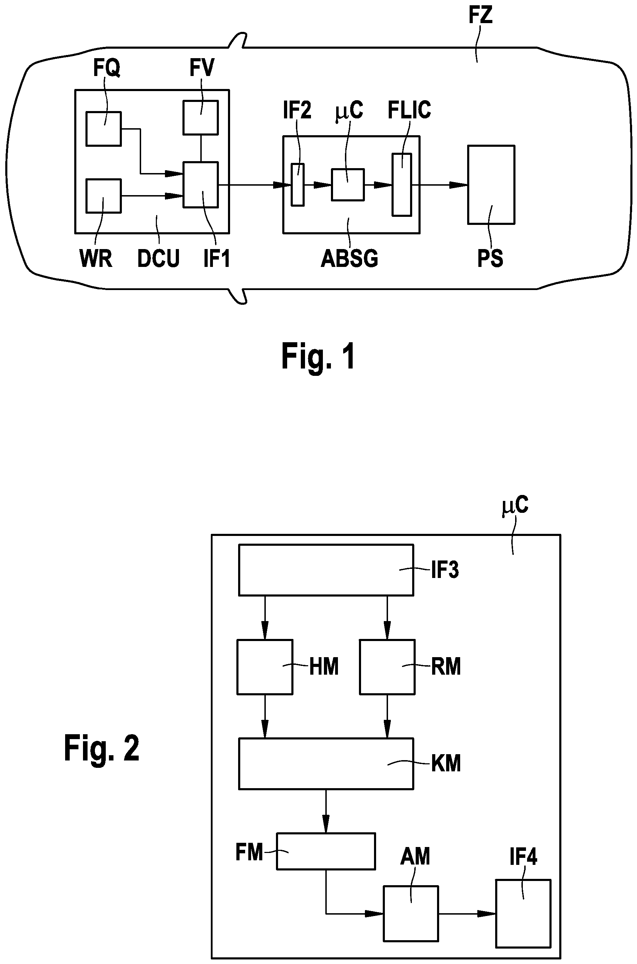

Figur 1 zeigt ein Blockschaltbild mit dem erfindungsgemäßen Steuergerät ABSG mit angeschlossenen Komponenten in einem Fahrzeug FZ. Vorliegend ist an das Steuergerät ABSG ein Sensorsteuergerät DCU angeschlossen. Das Airbagsteuergerät ABSG wiederum ist an die Personenschutzmittel PS wie Airbags oder Gurtstraffer angeschlossen. Das Sensorsteuergerät DCU beherbergt zumindest die erfindungsgemäß notwendige Sensorik, nämlich eine Wankratensensorik WR, eine Beschleunigungssensorik zur Erfassung der Fahrzeugquerbeschleunigung FQ und eine weitere Beschleunigungssensorik zur Erfassung der Fahrzeugvertikalbeschleunigung FV. Weitere Beschleunigungssensoren und andere Sensoren wie auch eine Körperschallsensorik usw. können in dem Steuergerät DCU enthalten sein. Es ist alternativ möglich, dass zumindest Teile der Beschleunigungssensorik im Airbagsteuergerät ABSG angeordnet sind oder auch getrennt als periphere Sensoren an verschiedenen Stellen im Fahrzeug FZ.

Die Sensordaten der Sensoren WR, FQ und FV werden vorliegend über die Schnittstelle IF1 an das Airbagsteuergerät ABSG und dabei an die Schnittstelle IF2 übertragen. Die Schnittstellen können als Punkt-zu-Punkt-Verbindung oder als Busverbindung ausgebildet sein. Weiterhin kann bereits eine Vorverarbeitung im Steuergerät DCU der Sensorsignale vorgesehen sein. Dazu gehört beispielsweise die Ableitung des Wankwinkels aus der Wankrate durch Integration.

Die empfangenen Sensordaten werden von der Schnittstelle IF2 zur Auswerteschaltung vorliegend einem Mikrocontroller μC übertragen, sodass das erfindungsgemäße Verfahren auf die Sensordaten dann angewendet werden kann. Vorliegend sind nur die für die Erfindung notwendigen Komponenten dargestellt. Weitere Komponenten, die für den Betrieb der einzelnen Steuergeräte notwendig sind, aber zum Verständnis der Erfindung nicht beitragen, sind der Einfachheit halber weggelassen worden.

Die Übertragung von der Schnittstelle IF2 zur Auswerteschaltung μC kann beispielsweise über den sogenannten SPI(Serial Peripherial Interface)-Bus erfolgen. Der Mikrocontroller μC leitet aus der Wankrate den Wankwinkel ab, wenn er nicht schon bereitgestellt wird und bestimmt dann aus der Wankrate und dem Wankwinkel den Rotationszustand des Fahrzeugs FZ. Weiterhin bestimmt der Mikrocontroller μC aus der Fahrzeugquerbeschleunigung und der Fahrzeugvertikalbeschleunigung den Haftungszustand des Fahrzeugs FZ in Fahrzeugvertikalrichtung. Der Rotationszustand und der Haftungszustand werden dann in eine von jeweils wenigstens drei Klassen klassifiziert. Die so klassifizierten Rotations- und Haftungszustände werden dann fusioniert, um zu erkennen, ob ein Überrollvorgang vorliegt oder nicht. Diese Fusion kann auf unterschiedliche Weisen durchgeführt werden. Beispielsweise kann vorgegeben sein, welche Kombinationen aus Klassifizierungen des Rotationszustands und des Haftungszustands einen Überrollvorgang anzeigen. Dies kann jedoch auch noch verfeinert werden, indem beispielsweise die Klassifizierungen noch bewertet werden.

In Abhängigkeit von dem erkannten Überrollvorgang wird dann das Ansteuersignal durch ein Ansteuerungsmodul erzeugt, das dann ebenfalls über eine SPI-Schnittstelle zur Ansteuerschaltung FLIC übertragen wird, sodass die Ansteuerschaltung die außerhalb des Steuergeräts ABSG befindlichen Personenschutzmittel PS ansteuert, indem beispielsweise ein Zündstrom zu den Zündelementen von den anzusteuernden Airbags geschaltet wird. Das Ansteuersignal beinhaltet dabei, welche Personenschutzmittel für den gegebenen Überrollvorgang anzusteuern sind.

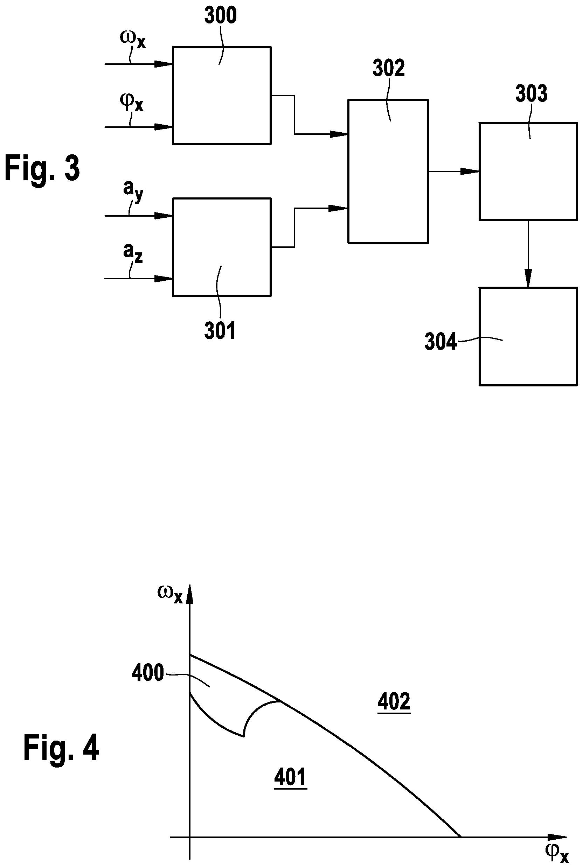

Figur 2 zeigt eine beispielhafte Konfiguration von Softwaremodulen auf dem Mikrocontroller μC. Eine Schnittstelle IF3 stellt die notwendigen Daten für das erfindungsgemäße Verfahren bereit. Dazu zählen neben der Wankrate der Wankwinkel, die Fahrzeugquerbeschleunigung und die Fahrzeugvertikalbeschleunigung. Weitere Daten, die fahrzeugspezifisch sind wie die Masse, die Höhe des Fahrzeugschwerpunkts, der statische Stabilitätsfaktor usw. werden aus einem Speicher geladen. Der Mikrocontroller μC kann in einem nicht dargestellten Modul aus der Wankrate den Wankwinkel berechnen. Im Haftungszustandsmodul HM wird der Haftungszustand aus der Fahrzeugquerbeschleunigung und der Fahrzeugvertikalbeschleunigung durch Division dieser beiden Größen bestimmt. Die Bestimmung kann noch verfeinert werden durch Korrekturfaktoren bzw. -summanden. Die Haftung, die damit bestimmt wird, muss dabei sehr viel größer sein als der statische Stabilitätsfaktor, ansonsten liegt kein Überrollvorgang vor. Dieser Vergleich wird demnach vorliegend im Haftungsmodul HM durchgeführt. Der Haftungszustand wird dann einem Klassifikationsmodul KM zugeführt, das den Haftungszustand in eine von mindestens drei Klassen einteilt. In das Rotationszustandsmodul RM gehen als Parameter die Wankrate und der Wankwinkel ein. Dazu wird dann beispielhaft das Diagramm aus Figur 4 verwendet. Auf der Abszisse ist der Wankwinkel und auf der Ordinate die Wankrate aufgetragen. Drei Bereiche sind vorgesehen: 400, 401 und 402, die die Wertepaare aus der Wankrate ωx und dem Wankwinkel φx eindeutig zuordnen. Im Bereich 400 liegt der überrollkritische Zustand vor, d. h., dieser Bereich umfasst Wertepaare, die nur dann einen Überrollvorgang anzeigen, wenn der Rotationszustand und der Haftungszustand den Überrollvorgang bedingen. Im Bereich 402 liegt immer ein Überrollvorgang vor, eine Betrachtung des Haftungszustands ist nicht mehr notwendig. Im Bereich 401 liegt kein Überrollvorgang vor.

Die Bewegungsgleichung für eine Rotationsbewegung um die Längsachse des Fahrzeugs ist im Fall einer lateralen Fahrzeugbewegung gegeben durch die Gleichungen 1 bis 3. Dabei ist $J_x$ das Trägheitsmoment um den aktuellen Drehpunkt, $h_{CM}$ die aktuelle Schwerpunktshöhe des Fahrzeugs, μ die Haftung, die der lateralen Fahrzeugbewegung zugeordnet werden kann, m die Masse des Fahrzeugs, ωx die Wankrate, φ der Wankwinkel, $a_z$ die vertikale Beschleunigung und SSF der Static Stability Factor des Fahrzeugs. Die Gleichungen sind wie folgt:

$$J_x \cdot \dot{\vec{\omega}} = \vec{F} \times \vec{r} \quad \text{(Gleichung 1)}$$

$$\Rightarrow \dot{\omega} \cong \frac{m}{J_x} h_{CM} \cdot (\mu - SSF) \cdot a_z \quad \text{(Gleichung 2)}$$

$$\Rightarrow \omega_{Threshold} \cong \sqrt{\frac{2m \cdot h_{CM} \cdot (\mu - SSF) \cdot a_z \cdot \varphi}{J_x}} \quad \text{(Gleichung 3)}$$

Implizit ist in den Gleichungen eine laterale Fahrzeuggeschwindigkeit beschrieben. Überschreitet die laterale Fahrzeuggeschwindigkeit eine kritische Geschwindigkeit, dann kann unter gewissen Voraussetzungen bei Überschreitung einer geeignet gewählten Wankratenschwellwertkurve (Gleichung 3) von einem überrollkritischen Rotationszustand des Fahrzeugs ausgegangen werden.

Liegt der aktuelle Rotationszustand im Bereich 400 in Figur 4, dann ist im Fall einer lateralen Fahrzeugbewegung unter gegeben Voraussetzungen mit einem Fahrzeugüberschlag zu rechnen. Die untere Grenze des Bereichs 400 ist auch durch die Bewegungsgleichung 3 motiviert. Voraussetzung dieser Annahme ist, dass die aktuelle laterale Beschleunigung zusammen mit der aktuellen vertikalen Beschleunigung nicht einer typischen Seitenführungskraft zugerechnet werden kann, soweit die Voraussetzung für den oben bezeichneten physikalischen Zusammenhang durch $\mu$ sehr viel größer als SSF sicher erfüllt ist. Vorliegend soll dies bei mindestens einer Haftung von 120% des SSF erfüllt sein.

Erreicht das Fahrzeug FZ zu einem beliebigen Zeitpunkt einen überschlagskritischen Bereich 400, so kann von einem kommenden Fahrzeugüberschlag ausgegangen werden, unabhängig, ob hierzu kurzzeitige Rotationszustände im überschlagsunkritischen Bereich 401 durchlaufen werden. Das Durchlaufen überschlagskritischer Bereiche (Wertepaare) muss zeitlich stabil sein. D.h. dass gegebenenfalls mehrere überschlagskritische Wertepaare nacheinander durchlaufen werden müssen, bevor eine Auslöseentscheidung erfolgt. Die für eine Auslöseentscheidung erforderliche zeitliche Dauer im überschlagskritischen Bereich kann hierbei je nach Abstand von der Schwellwertkurve abweichen.

Der Rotationszustand wird beispielsweise damit durch die Bereiche 400, 401 und 402 im Klassifikationsmodul KM klassifiziert. Im Fusionsmodul FM werden dann die Klassifizierungen miteinander fusioniert, um festzustellen, ob ein Überrollvorgang vorliegt oder nicht. Dies kann auf vielerlei Arten geschehen. Beispielsweise kann eine feste Zuordnung zum Überrollvorgang der Klassenkombinationen des Haftungszustands und des Rotationszustands vorgenommen werden. Aber auch alle anderen denkbaren Möglichkeiten der Fusion sind vorliegend möglich. Wird ein Überrollvorgang festgestellt, dann wird im Ansteuerungsmodul AM ein Ansteuerungssignal erzeugt, das dann über die Schnittstelle IF4 beispielsweise über den SPI-Bus zur Ansteuerungsschaltung FLIC übertragen wird.

Figur 3 zeigt ein Signalablaufdiagramm des erfindungsgemäßen Verfahrens. Die Wankrate $\omega$x und der Wankwinkel $\varphi$ x gehen in den Block 300 ein, in dem eine Bewertung des Rotationszustands vorgenommen wird. Dies kann beispielsweise mittels Figur 4 geschehen. Die Fahrzeugquerbeschleunigung ay und die Fahrzeugvertikalbeschleunigung az gehen in den Block 301 ein, in dem die Bewertung der Haftung bezüglich der lateralen Bewegung vorgenommen wird. Im Block 302 erfolgt die gemeinsame Bewertung des Rotations- und des Haftungszustands. Im Block 303 erfolgt damit dann die Erkennung eines Fahrzeugsüberschlags in Folge einer lateralen Fahrzeugbewegung. Im Block 304 erfolgt dann die Ansteuerung der Personenschutzmittel.

## Patentansprüche

1. Verfahren zur Ansteuerung von Personenschutzmitteln (PS) für ein Fahrzeug (FZ) in Abhängigkeit von einem Überrollvorgang, der in Abhängigkeit von rotatorischen und kinematischen Größen einer Haftung und einem statischen Stabilitätsfaktor erkannt wird, **dadurch gekennzeichnet, dass** mittels einer Wankrate ($\omega$x) und einem Wankwinkel ($\varphi$x) ein Rotationszustand bestimmt wird, dass aus einer Fahrzeugquerbeschleunigung (ay) und einer Fahrzeugvertikalbeschleunigung (az) ein Haftungszustand bestimmt wird, dass mittels des Rotationszustands und des Haftungszustands ein Überrollvorgang erkannt wird, wobei die Haftung mindestens 120% des statischen Stabilitätsfaktors ist, wobei in Abhängigkeit von dem Überrollvorgang ein Ansteuersignal erzeugt wird und die Personenschutzmittel (PS) in Abhängigkeit von dem Ansteuerungssignal angesteuert werden.

2. Verfahren nach Anspruch 1, **dadurch gekennzeichnet, dass** die Haftung in Abhängigkeit von einer Division der Fahrzeugquerbeschleunigung durch die Fahrzeugvertikalbeschleunigung (az) bestimmt wird.

3. Verfahren nach Anspruch 1 oder 2, **dadurch gekennzeichnet, dass** der Rotationszustand und der Haftungszustand jeweils in mindestens eine von drei Klassen eingeteilt werden, wobei der Überrollvorgang in Abhängigkeit von den jeweiligen Klassifizierungen bestimmt wird.

4. Verfahren nach einem der vorhergehenden Ansprüche, **dadurch gekennzeichnet, dass** das Verfahren bei dem Wankwinkel von <15 Grad eingesetzt wird.

5. Verfahren nach einem der vorhergehenden Ansprüche, **dadurch gekennzeichnet, dass** für ein Wertepaar aus der Wankrate ($\omega$x) und dem Wankwinkel ($\varphi$x) wenigstens drei Bereiche 400 bis 402 vorgegeben werden, wobei ein erster Bereich (402) erste Wertepaare umfasst, die unabhängig von der Fahrzeugquerbeschleunigung (ay) und der Fahrzeugvertikalbeschleunigung (az) sowie von Drehmomenten den Überrollvorgang anzeigen, wobei ein zweiter Bereich (400) zweite Wertepaare umfasst, die keinen Überrollvorgang anzeigen, wobei ein dritter Bereich (400) dritte Wertepaare umfasst, die nur dann einen Überrollvorgang anzeigen, wenn der Rotationszustand und der Haftungszustand den Überrollvorgang bedingen.

6. Verfahren nach Anspruch 5, **dadurch gekennzeichnet, dass** eine Schwelle zwischen dem zweiten und dem dritten Bereichen in Abhängigkeit von statischen Fahrzeuggrößen, der Fahrzeugvertikalbeschleunigung (az), dem Wankwinkel ($\varphi$x) und der Haftung ($\mu$) bestimmt wird.

7. Verfahren nach Anspruch 6, **dadurch gekennzeichnet, dass** die statischen Fahrzeuggrößen der statische Stabilitätsfaktor (SSF), die Fahrzeugmasse (m), die Schwerpunktshöhe ($h_{CM}$) im Ruhezustand und ein Trägheitsmoment (J) sind.

8. Steuergerät (ABSG) zur Ansteuerung von Personenschutzmitteln (PS) für ein Fahrzeug (FZ) mit:

einer Schnittstelle (IF2), die eine Fahrzeugquerbeschleunigung (ay), eine Fahrzeugvertikalbeschleunigung (az), eine Wankrate ($\omega$x) und einen Wankwinkel ($\varphi$x) bereitstellt
einer Auswerteschaltung ($\mu$C) mit einem Haftungszustandsmodul (HM), dass einen Haftungszustand in Abhängigkeit von der Fahrzeugquerbeschleunigung (ay) und der Fahrzeugvertikalbeschleunigung (az) bestimmt, mit einem Rotationszustandsmodul (RM), das einen Rotationszustand in Abhängigkeit von der Wankrate ($\omega$x) und dem Wankwinkel ($\varphi$x) bestimmt, mit einem Fusionsmodul (FM), das in Abhängigkeit vom Haftungszustand und von dem Rotationszustand einen Überrollvorgang nur dann erkennt, wenn eine Haftung mindestens 120% des statischen Stabilitätsfaktors ist, mit einem Ansteuerungsmodul (AM), dass in Abhängigkeit von dem Überrollvorgang ein Ansteuersignal erzeugt
einer Ansteuerschaltung (FLIC), die in Abhängigkeit von dem Ansteuerungssignal die Personenschutzmittel (PS) ansteuert.

9. Steuergerät nach Anspruch 8, **dadurch gekennzeichnet, dass** die Auswerteschaltung ein Klassifizierungsmodul (KM) aufweist, das jeweils den Haftungszustand und den Rotationszustand für das Fusionsmodul (FM) in eine von wenigstens drei Klassen klassifiziert.

10. Steuergerät nach Anspruch 8 oder 9, **dadurch gekennzeichnet, dass** eine Wankratensensorik (WR) und eine Fahrzeugquer- sowie -vertikalbeschleunigungssensorik (FQ, FV) im Steuergerät (ABSG) angeordnet sind.

**Claims**

1. Method for controlling personal protection means (PS) for a vehicle (FZ) as a function of a rollover process which is detected as a function of rotational and kinematic variables of adhesion and a static stability factor, **characterized in that** a rotational state is determined by means of a rolling rate ($\omega$x) and a rolling angle ($\varphi$x), **in that** an adhesion state is determined from a vehicle transverse acceleration (ay) and a vehicle vertical acceleration (az), **in that** a rollover process is detected by means of the rotational state and the adhesion state, wherein the adhesion is at least 120% of the static stability factor, wherein a control signal is generated as a function of the rollover process, and the personal protection means (PS) are controlled as a function of the control signal.

2. Method according to Claim 1, **characterized in that** the adhesion is determined as a function of a division of the vehicle transverse acceleration by the vehicle vertical acceleration (az).

3. Method according to Claim 1 or 2, **characterized in that** the rotational state and the adhesion state are each divided into at least one of three classes, wherein the rollover process is determined as a function of the respective classifications.

4. Method according to one of the preceding claims, **characterized in that** the method is used at a rolling angle of <15 degrees.

5. Method according to one of the preceding claims, **characterized in that** at least three ranges 400 to 402 are predefined for a value pair composed of the rolling rate ($\omega$x) and the rolling angle ($\varphi$x), wherein a first range (402) comprises first value pairs which indicate the rollover process independently of the vehicle transverse acceleration (ay) and the vehicle vertical acceleration (az) and of torques, wherein a second range (400) comprises two value pairs which do not indicate a rollover process, wherein a third range (400) comprises three value pairs which indicate a rollover process only when the rotational state and the adhesion state bring about the rollover process.

6. Method according to Claim 5, **characterized in that** a threshold is determined between the second and the third ranges as a function of static vehicle variables, the vehicle vertical acceleration (az), the rolling angle ($\varphi$x) and the adhesion ($\mu$).

7. Method according to Claim 6, **characterized in that** the static vehicle variables are the static stability factor (SSF), the vehicle mass (m), the height of the centre of gravity ($h_{CM}$) in the state of rest and a moment of inertia (J).

8. Control unit (ABSG) for controlling personal protection means (PS) for a vehicle (FZ) having:

an interface (IF2) which makes available a vehicle transverse acceleration (ay), a vehicle vertical acceleration (az), a rolling rate ($\omega$x) and a rolling angle ($\varphi$x),
an evaluation circuit ($\mu$C) with an adhesion state module (HM), in that an adhesion state is determined as a function of the vehicle transverse acceleration (ay) and the vehicle vertical acceleration (az), with a rotational state module (RM), which determines a rotational state as a function of the rolling rate ($\omega$x) and the rolling angle ($\varphi$x), with a fusion module (FM) which detects a rollover process as a function of the adhesion state and of the rotational state only when the adhesion is at least 120% of the static stability factor, with a control module (AM) which generates a control signal as a function of the rollover process, and
a control circuit (FLIC) which controls the personal protection means (PS) as a function of the control signal.

9. Control unit according to Claim 8, **characterized in that** the evaluation circuit has a classification module (KM) which respectively classifies the adhesion state and the rotational state for the fusion module (FM) into one of at least three classes.

10. Control unit according to Claim 8 or 9, **characterized in that** a rolling rate sensor system (WR) and a vehicle transverse acceleration sensor system (FQ) and a vehicle vertical acceleration sensor system (FV) are arranged in the control unit (ABSG).

**Revendications**

1. Procédé de commande de moyens de protection des personnes (PS) pour un véhicule (FZ) en fonction d'un processus de retournement qui est détecté en fonction de paramètres de rotation et cinématiques d'une adhérence et d'un facteur de stabilité statique, **caractérisé en ce qu'**un état de rotation est déterminé au moyen d'une vitesse de roulis ($\omega$x) et d'un angle de roulis ($\varphi$x), **en ce qu'**un état d'adhérence est déterminé à partir d'une accélération transversale (ay) du véhicule et d'une accélération verticale (az) du véhicule, **en ce qu'**un processus de retournement est détecté au moyen de l'état de rotation et de l'état d'adhérence, dans lequel l'adhérence est égale à au moins 120 % du facteur de stabilité statique, dans lequel un signal de commande est généré en fonction du processus de retournement et les moyens de protection des personnes (PS) sont commandés en fonction du signal de commande.

2. Procédé selon la revendication 1, **caractérisé en ce que** l'adhérence est déterminée en fonction d'une division de l'accélération latérale du véhicule par l'accélération verticale du véhicule (az).

3. Procédé selon la revendication 1 ou 2, **caractérisé en ce que** l'état de rotation et l'état d'adhérence sont respectivement classés dans au moins l'une de trois classes, dans lequel le processus de retournement est déterminé en fonction des classifications respectives.

4. Procédé selon l'une des revendications précédentes, **caractérisé en ce que** le procédé est mis en oeuvre pour un angle de roulis de < 15 degrés.

5. Procédé selon l'une des revendications précédentes, **caractérisé en ce qu'**au moins trois plages de 400 à 402 sont prédéterminées pour une paire de valeurs de la vitesse de roulis ($\omega$x) et de l'angle de roulis ($\varphi$x), dans lequel

une première plage (402) comprend des premières paires de valeurs qui indiquent le processus de retournement indépendamment de l'accélération latérale (ay) du véhicule et de l'accélération verticale (az) du véhicule ainsi que de couples, dans lequel une deuxième plage (400) comprend des deuxièmes paires de valeurs qui n'indiquent pas de processus de retournement, dans lequel une troisième plage (400) comprend des troisièmes paires de valeurs qui n'indiquent un processus de retournement que lorsque l'état de rotation et l'état d'adhérence provoquent le processus de retournement.

6. Procédé selon la revendication 5, **caractérisé en ce qu'**un seuil est déterminé entre les deuxième et troisième plages en fonction de grandeurs statiques du véhicule, de l'accélération verticale (az) du véhicule, de l'angle de roulis ($\varphi$x) et de l'adhérence ($\mu$).

7. Procédé selon la revendication 6, **caractérisé en ce que** les grandeurs statiques du véhicule sont le facteur de stabilité statique (SSF), la masse du véhicule (m), la hauteur du centre de gravité au repos ($h_{CM}$) et un moment d'inertie (J).

8. Appareil de commande (ABSG) destiné à commander des moyens de protection des personnes (PS) pour un véhicule (FZ), comportant :

une interface (IF2) qui fournit une accélération latérale (ay) du véhicule, une accélération verticale (az) du véhicule, une vitesse de roulis ($\omega$x) et un angle de roulis ($\varphi$x),
un circuit d'évaluation ($\mu$C) comportant un module d'état d'adhérence (HM) qui détermine un état d'adhérence en fonction de l'accélération latérale (ay) du véhicule et de l'accélération verticale (az) du véhicule, comportant un module d'état de rotation (RM) qui détermine un état de rotation en fonction de la vitesse de roulis ($\omega$x) et de l'angle de roulis ($\varphi$x), comportant un module de fusion (FM) qui ne détecte un processus de retournement (FM) que lorsqu'une adhérence est au moins égale à 120 % du facteur de stabilité statique, comportant un module de commande (AM) qui génère un signal de commande en fonction du processus de retournement, et un circuit de commande (FLIC) qui commande les moyens de protection des personnes (PS) en fonction du signal de commande.

9. Appareil de commande selon la revendication 8, **caractérisé en ce que** le circuit d'évaluation comporte un module de classification (KM) qui classe respectivement l'état d'adhérence et l'état de rotation du module de fusion (FM) dans l'une d'au moins trois classes.

10. Appareil de commande selon la revendication 8 ou 9, **caractérisé en ce qu'**un capteur de vitesse de roulis (WR) et un capteur d'accélération transversale et verticale (FQ, FV) du véhicule sont disposés dans l'appareil de commande (ABSG).

**Fig. 1**

**Fig. 2**

**Fig. 3**

$\omega_x$

$\varphi_x$

300

$a_y$

$a_z$

301

302

303

304

**Fig. 4**

$\omega_x$

400

402

401

$\varphi_x$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006018029 A1